# EUROPÄISCHE PATENTANMELDUNG

(11) **EP 0 789 027 A1**
(43) Veröffentlichungstag der Anmeldung: **13.08.1997**
(21) Anmeldenummer: 97100943.6
(22) Anmeldetag: 22.01.1997
(51) Int. Cl.: C07F 9/48

(54) **Verfahren zur Herstellung von Phosphonigsäuremonoalkylestern**

(30) Priorität: 06.02.1996 DE 19604195
(71) Anmelder: HOECHST AKTIENGESELLSCHAFT, 65929 Frankfurt am Main (DE)
(72) Erfinder: Kleiner, Hans-Jerg, Dr., 61476 Kronberg (DE)

(57) **Zusammenfassung**

Die Erfindung betrifft ein Verfahren zur Herstellung von Phosphonigsäuremonoalkylestern der Formel I 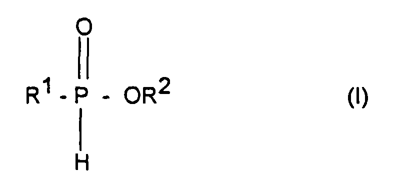 worin
- R¹: (C₁-C₁₆)-Alkyl, Cyclohexyl, Cyclopentyl, Phenyl, die auch mit Halogen, (C₁-C₆)-Alkyl-, (C₁-C₆)-Alkoxy-, Dialkylamino-gruppen substituiert sein können
und
- R²: (C₁-C₈)-Alkyl bedeuten,
dadurch gekennzeichnet, daß man Dichlorphosphane der Formel (II)

R¹ - PCl₂ (II)

worin R¹ die oben angeführte Bedeutung besitzt, mit Alkoholen der Formel (III)

R²OH (III)

worin R² die oben angeführte Bedeutung hat, wobei das Molverhältnis Dichlorphosphan/Alkohol 1:3 bis 1:20 ist, umsetzt und anschließend, sobald der Gehalt an ionogenem Chlor im Reaktionsgemisch 50 - 75 % des theoretischen Gesamtchlorgehaltes der Reaktionsmischung beträgt, mit Ammoniak umsetzt.

## Beschreibung

Die Erfindung betrifft ein Verfahren zur Herstellung von Phosphonigsäuremonoalkylestern.

Phosphonigsäuremonoalkylester besitzen großes Interesse als Zwischenprodukte zur Herstellung von Flammschutzmitteln, Herbiziden, biociden Hilfsmitteln und Metallextraktionsmitteln. Insbesondere sind sie auch von Bedeutung für die Herstellung von Arzneimitteln, beispielsweise zur Herstellung antidepressiv und/oder antiepileptisch wirkender Arzneimittel (EP-OS 319 479, EP-OS 402 312 und EP-PS 319 482).

Kurzkettige Phosphonigsäuremonoalkylester werden allgemein hergestellt durch Umsetzung von Dichlorphosphanen mit Alkoholen, gegebenenfalls in Gegenwart von Aminen oder Ammoniak nach folgendem Schema: 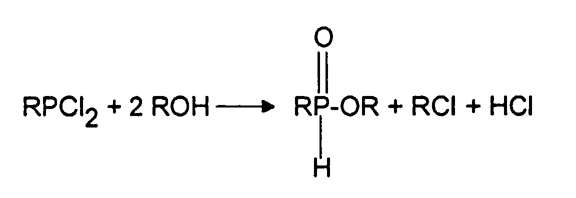 (B.M. Gladshtein et al., Zh. Obsh. Khim 39, 1951 (1969))
Bevorzugt ist hierfür der Einsatz von Ammoniak als Base. Die Reaktion erfolgt bei -60 bis -40°C unter Zudosierung von 2 Molen Alkohol zu einem Mol Dichlorphosphan in Dichlormethan als Lösungsmittel. Die Ausbeuten betragen etwa 70 % der Theorie. Unbefriedigend bei diesem Verfahren ist insbesondere die erforderliche Verwendung sehr tiefer Temperaturen. Die Ausbeuten sind ebenfalls nicht voll befriedigend.

Es bestand daher der Bedarf, dieses Ammoniak-Verfahren so zu verbessern, daß ohne großen technischen Aufwand die gewünschten Produkte in hoher Ausbeute und hoher Reinheit gebildet werden.

Diese Aufgabe wird gelöst durch ein Verfahren zur Herstellung von Phosphonigsäuremonoalkylestern der Formel I 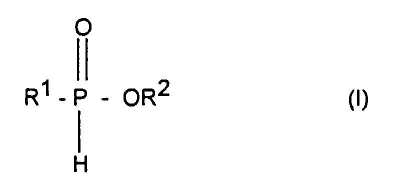 worin
- R¹: (C₁-C₁₆)-Alkyl, Cyclohexyl, Cyclopentyl, Phenyl, die auch mit Halogen, (C₁-C₆)-Alkyl-, (C₁-C₆)-Alkoxy-, Dialkylamino-gruppen substituiert sein können
und
- R²: (C₁-C₈)-Alkyl bedeuten,
dadurch gekennzeichnet, daß man Dichlorphosphane der Formel (II)

R¹ - PCl₂ (II)

worin R¹ die oben angeführte Bedeutung besitzt, mit Alkoholen der Formel (III)

R²OH (III)

worin R² die oben angeführte Bedeutung hat, wobei das Molverhältnis Dichlorphosphan/Alkohol 1:3 bis 1:20 ist, umsetzt und anschließend, sobald der Gehalt an ionogenem Chlor im Reaktionsgemisch 50 - 75 % des theoretischen Gesamtchlorgehaltes der Reaktionsmischung beträgt, mit Ammoniak umsetzt.

Wichtig ist die Reaktion für Verbindungen, worin R² gleich (C₁-C₆)Alkyl, insbesondere (C₁-C₄)Alkyl ist.

Von besonderem Interesse ist die Reaktion zur Umsetzung von Dichlormethylphosphan, Dichlor-ethylphosphan, Dichlor-propylphosphar, Dichlorbutylphosphan, Dichlor-cyclohexylphosphan, Dichlor-phenylphosphan, Dichlor-4-methoxyphenylphosphan und Dichlor-4-dimethylaminophenylphosphan.

Als Alkohole kommen z.B. Methanol, Ethanol, Isopropanol oder n-Butanol in Frage. Insbesondere Ethanol ist bevorzugt. Die Alkohole sollen möglichst frei von Wasser sein. Sie müssen im Überschuß eingesetzt werden. Dieser Überschuß beträgt im Verhältnis Dichlorphosphan:Alkohol 1:3 bis 1:20, insbesondere 1:4,5 bis 1:15. Zusätzlich können inerte Lösungsmittel wie z.B. Toluol oder Chlorbenzol eingesetzt werden.

Das Verfahren wird vorteilhaft so durchgeführt, daß in den Alkohol, gegebenenfalls vermischt mit dem Lösungsmittel, unter Stickstoffatmosphäre das Dichlorphosphan bei -20 bis +30°C, vorzugsweise -10 bis +10°C, eindosiert wird. Anschließend wird nachgerührt, bis 50-75 %, bevorzugt 50-65 % des theoretischen Gesamtchlorgehaltes der Reaktionsmischung gefunden werden. Dieser Gesamtchlorgehalt errechnet sich aus dem Chlorgehalt der Reaktionsmischung, wie er durch Beimischung des Dichlorphosphans zwangsläufig entsteht. Die Nachrührperiode kann durch Erwärmen der Reaktionsmischung verkürzt werden. Dabei sollen aber im allgemeinen Temperaturen von 50-60°C nicht überschritten werden. Anschließend wird mit Ammoniak umgesetzt, wobei dieser zweckmäßig im Überschuß von 5 bis 20 Mol-% eingesetzt wird, um sicherzustellen, daß das Reaktionsgut im alkalischen Bereich verbleibt. Nach beendeter Umsetzung wird zweckmäßig bei Raumtemperatur nachgerührt, dann von gebildetem Ammoniumchlorid abgesaugt. Dabei kann der Zusatz inerter Lösungsmittel sinnvoll sein, insbesondere bei der Herstellung der Methylester, um die Abscheidung des Ammoniumchlorids quantitativ zu gestalten. Das Filtrat wird in üblicher Weise destillativ aufgearbeitet. Das Verfahren kann auch kontinuierlich gestaltet werden. Für bestimmte Einsatzgebiete fallen die verfahrensgemäß hergestellten Phosphonigsäuremonoester bereits als Rohprodukte so rein an, daß eine destillative Reinigung unterbleiben kann.

### Beispiel 1

In 500 g (6,76 Mol) Isobutanol werden unter Stickstoffatmosphäre und Rühren bei 5-10°C 200 g (1,71 Mol) Dichlormethylphosphan während einer Stunde und 40 Minuten eingetropft. Anschließend wird 55 Minuten auf ca. 50°C erwärmt, dann wird auf Raumtemperatur gekühlt. Der Reaktionsansatz hat jetzt 8,9 % ionogenes Chlor. Nun wird unter Kühlung bei 20-25°C eine Stunde Ammoniak eingeleitet, dann 20 Minuten nachgerührt und abgesaugt, mit 80 g Isobutanol wird nachgespült. Das Filtrat wird im Vakuum von den Leichtsiedern befreit und dann bei 2,5-3 mbar bei 100°C mit Hilfe eines Dünnschichtverdampfers destilliert. Man erhält 215 g Methanphosphonigsäuremonoisobutylester. Das entspricht einer Ausbeute von 92,5 % d.Th..

### Beispiel 2

In 400 g (12,5 Mol) Methanol werden unter Stickstoffatmosphäre und Rühren bei 0°C 200 g (1,71 Mol) Dichlormethylphosphan während zwei Stunden eingetropft. Dann wird 3 Stunden bei 5-8°C nachgerührt. Der Reaktionsansatz hat jetzt ca. 11,6 % ionogenes Chlor. Nun wird bei 0°C Ammoniak eingeleitet, bis der Reaktionsansatz neutral reagiert. Dann wird auf 30°C erwärmt, dabei gast Methylchlorid ab. Dann wird gekühlt, abgesaugt und mit 80 g Methanol nachgespült. Das Filtrat wird von Leichtsiedern befreit und der Rückstand destilliert. Man erhält bei 30 mbar und einer Übergangstemperatur von 78°C 128 g Methanphosphonigsäuremonomethylester. Das entspricht einer Ausbeute von 80 % d.Th..

### Beispiel 3

In 500 g (8,34 Mol) Isopropanol werden unter Stickstoffatmosphäre und Rühren 200 g (1,71 Mol) Dichlormethylphosphan bei 5-10°C während zwei Stunden eingetropft. Dann wird auf 30-35°C solange erwärmt, bis der Wert des ionogenen Chlors bei ca. 9,6 % liegt. Nun wird bei 15-20°C Ammoniak eingegast, bis der Reaktionsansatz neutral reagiert. Dann wird abgesaugt, mit 80 g Isopropanol nachgespült und das Filtrat destillativ von Tiefersiedern befreit. Der Rückstand wird bei 15 mbar destilliert. Bei einer Übergangstemperatur von 65°C erhält man 194 g Methanphosphonigsäuremonoisopropylester. Das entspricht einer Ausbeute von 93 % d.Th..

### Beispiel 4

In 1300 g (28,2 Mol) Ethanol werden bei 0-5°C unter Stickstoffatmosphäre und Rühren während zwei Stunden 800 g (6,84 Mol) Dichlormethylphosphan eingetropft. Anschließend wird die Temperatur auf 27-28°C erhöht, bei dieser Temperatur wird nun unter leichter Kühlung gehalten während zwei Stunden. Nun beträgt der Gehalt an ionogenem Chlor 13 %. Nun wird auf 0°C gekühlt und während einer Stunde 120 g (7,06 Mol) Ammoniak eingegast. Anschließend wird langsam bis auf 90°C Innentemperatur erhitzt, um das Ethylchlorid abzugasen. Dann wird gekühlt und abgesaugt sowie mit 500 g Ethanol nachgespült. Nach Abdestillation der Leichtsieder wird der Rückstand bei 12 mbar und einer Übergangstemperatur von 60°C destilliert. Man erhält 670 g Methanphosphonigsäuremonoethylester. Das entspricht einer Ausbeute von 91 % d.Th..

### Beispiel 5

In 325 g (7,07 Mol) Ethanol werden unter Stickstoffatmosphäre und Rühren bei 0-5°C in zwei Stunden 306 g (1,71 Mol) Dichlorphenylphosphan eingetropft. Nach 30 Minuten Nachrühren ohne Kühlung beträgt die Temperatur auf des Ansatzes 18°C und der Gehalt an ionogenem Chlor 11,3 %. Nun wird bei -5 bis 0°C etwa eine Stunde Ammoniak eingegast, bis der Ansatz neutral reagiert. Dann wird nachgerührt und abgesaugt sowie mit 250 ml Ethanol nachgespült. Nach Abdestillation der Leichtsieder wird der Rückstand im Dünnschichtverdampfer bei 0,4 mbar und 125-130°C destilliert. Man erhält 265 g Phenylphosphonigsäuremonoethylester. Das entspricht einer Ausbeute von 91 % d.Th..

### Beispiel 6

In 65,8 g (1,43 Mol) Ethanol werden unter Stickstoffatmosphäre und Rühren 50 g (0,345 Mol) Dichlor-isopropylphosphan in einer Stunde eingetropft bei 0-5°C. Nach Entfernung des Kühlbades steigt die Temperatur in 25 Minuten auf 30°C, dann wird auf 25°C abgekühlt und 5 Minuten nachgerührt. Der Gehalt an ionogenem Chlor beträgt jetzt 11,0 %. Nun wird auf 0°C gekühlt und 7 g (0,41 Mol) Ammoniak eingegast. Nun wird der Ansatz schrittweise bis 90°C erhitzt, dabei gast Ethylchlorid ab. Nach Abkühlung wird abgesaugt, mit Ethanol nachgespült und das Filtrat destillativ aufgearbeitet. Man erhält 39 g Isopropylphosphonigsäuremonoethylester (Siedepunkt: 68-70°C bei 11 mbar). Das entspricht einer Ausbeute von 83 % d.Th..

### Beispiel 7

In 81,2 g (1,77 Mol) Ethanol werden unter Stickstoffatmosphäre und Rühren bei 0°C 48 g (0,30 Mol) Dichlor-isobutylphosphan während 90 Minuten eingetropft. Anschließend wird das Kältebad entfernt. Die Temperatur läßt man auf 26°C ansteigen und hält unter Kühlung bei dieser Temperatur, bis ein Chlorwert von 8,3 % ermittelt ist. Dann wird auf 0°C gekühlt und solange Ammoniak eingeleitet, bis der Ansatz schwach alkalisch reagiert. Nun läßt man auf Raumtemperatur kommen und erwärmt dann schrittweise bis 70°C, dabei gast Ethylchlorid ab. Anschließend wird gekühlt und abgesaugt sowie mit Ethanol gewaschen. Das Filtrat wird destillativ aufgearbeitet. Man erhält 42 g Isobutylphosphonigsäuremonoethylester (Siedepunkt: 86-88°C bei 12 mbar). Das entspricht einer Ausbeute von 93 % d.Th..

## Patentansprüche

1. Verfahren zur Herstellung von Phosphonigsäuremonoalkylestern der Formel I 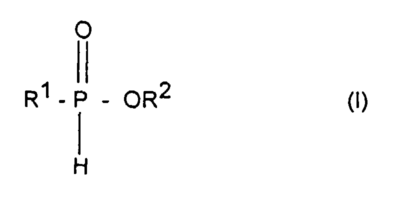 worin
R¹ (C₁-C₁₆)-Alkyl, Cyclohexyl, Cyclopentyl, Phenyl, die auch mit Halogen, (C₁-C₆)-Alkyl-, (C₁-C₆)-Alkoxy-, Dialkylamino-gruppen substituiert sein können
und
R² (C₁-C₈)-Alkyl bedeuten,
dadurch gekennzeichnet, daß man Dichlorphosphane der Formel (II)
R¹ - PCl₂ (II)
worin R¹ die oben angeführte Bedeutung besitzt, mit Alkoholen der Formel (III)
R²OH (III)
worin R² die oben angeführte Bedeutung hat, wobei das Molverhältnis Dichlorphosphan/Alkohol 1:3 bis 1:20 ist, umsetzt und anschließend, sobald der Gehalt an ionogenem Chlor im Reaktionsgemisch 50 - 75 % des theoretischen Gesamtchlorgehaltes der Reaktionsmischung beträgt, mit Ammoniak umsetzt.

2. Verfahren nach Anspruch 1, dadurch gekennzeichnet, daß R² für (C₁-C₆)Alkyl, insbesondere (C₁-C₄)Alkyl steht.

3. Verfahren nach Anspruch 1, dadurch gekennzeichnet, daß als Dichlorphosphan der Formel (II) Dichlor-methylphosphan, Dichlor-ethylphosphan, Dichlor-propylphosphan, Dichlor-butylphosphan, Dichlor-cyclohexylphosphan, Dichlor-phenylphosphan, Dichlor-4-methoxyphenylphosphan und Dichlor-4-dimethylaminophenylphosphan eingesetzt wird.

4. Verfahren nach Anspruch 1 bis 3, dadurch gekennzeichnet, daß als Alkohol R²OH Methanol, Ethanol, Isopropanol oder n-Butanol, insbesondere Ethanol eingesetzt wird.

5. Verfahren nach Anspruch 1 bis 4, dadurch gekennzeichnet, daß das Verhältnis Dichlorphosphan:Alkohol 1:4,5 bis 1:15 beträgt.

6. Verfahren nach Anspruch 1 bis 5, dadurch gekennzeichnet, daß zusätzlich ein inertes Lösungsmittel, insbesondere Toluol oder Chlorbenzol eingesetzt wird.

7. Verfahren nach Anspruch 1 bis 6, dadurch gekennzeichnet, daß das Dichlorphosphan bei -20 bis +30°C, insbesondere -10 bis +10°C in den Alkohol eindosiert wird.

8. Verfahren nach Anspruch 1 bis 7, dadurch gekennzeichnet, daß mit Ammoniak umgesetzt wird, sobald der Gehalt an ionogenem Chlor im Reaktionsgemisch 50 - 65 % beträgt.

9. Verfahren nach Anspruch 1 bis 8, dadurch gekennzeichnet, daß der Ammoniak im Überschuß von 5 bis 20 Mol-% eingesetzt wird.
